# EUROPEAN PATENT SPECIFICATION

(11) **EP 4 103 909 B1**
(45) Date of publication and mention of the grant of the patent: **16.10.2024**
(21) Application number: 20705353.9
(22) Date of filing: 14.02.2020
(51) Int. Cl.: G01C 21/00

(54) **SUPPORTING LOCALISATION OF A MOBILE DEVICE**
UNTERSTÜTZEN DER LOKALISIERUNG EINER MOBILEN VORRICHTUNG
SOUTIEN À LA LOCALISATION D'UN DISPOSITIF MOBILE

(43) Date of publication of application: 21.12.2022
(73) Proprietor: Telefonaktiebolaget LM Ericsson (publ), 164 83 Stockholm (SE)
(72) Inventor: ARAÚJO, José, 117 31 STOCKHOLM (SE); SORRENTINO, Stefano, 171 68 SOLNA (SE)
(74) Representative: Ericsson
(86) International application number: PCT/EP2020/053861
(87) International publication number: WO 2021/160280

(56) References cited:
- WO-A1-2018/027206
- ZONGYING SHI ET AL: "Feature selection for reliable data association in visual SLAM", MACHINE VISION AND APPLICATIONS., vol. 24, no. 4, 7 July 2012 (2012-07-07), DE, pages 667 - 682, XP055476923, ISSN: 0932-8092, DOI: 10.1007/s00138-012-0440-6

## Description

### TECHNICAL FIELD

The present disclosure relates to a method for supporting localisation of a mobile device, a map server for supporting localisation of a mobile device, a corresponding computer program, and a corresponding computer program product.

### BACKGROUND

Localisation is used in many applications, such as self-driving cars, unmanned aerial vehicles (UAVs), robots, as well as for augmented reality (AR) and virtual reality (VR) applications. Localisation is the process of determining the pose, i.e., position and orientation, of a device or object in space.

Localisation of mobile devices such as mobile phones, tablets, head-mounted displays (HMDs), autonomous vehicles, and remote-controlled vehicles, can be performed by merging structural (visual and/or depth-related) information from sensors such as cameras, lidar, etc., and motion information obtained from Inertial Measurement Units (IMUs). In this way, the mobile device is able to acquire information about six degrees-of-freedom movements of the user (rotation and translation). This information can be used for both localisation and mapping. Mapping is the process of generating a map which subsequently can be used for localisation. Localisation is based on a localisation map comprising features representing visual and/or structural elements in the real world. By capturing visual or structural information (e.g., using a camera or lidar), and comparing the captured information with features in the localisation map, the pose of the mobile device can be determined.

When both localisation and mapping is combined, the process of capturing visual and/or depth-related information about an area or real-world space, while keeping track of a mobile devices' current pose, is known as Simultaneous Localisation and Mapping, or SLAM.

Examples of the application of SLAM are Google Tango and the Microsoft Hololens AR HMD. Google Tango is a platform that uses computer vision to provide mobile devices (smartphones and tablets) the ability to determine their pose relative to their environment. Google has developed both a Tango-enabled tablet and a smartphone together with Lenovo, where the table features a wide-angle camera, a depth sensing camera, an IMU, and a software stack that enables motion tracking and mapping in 3D space. Similarly, the Microsoft Hololens AR HMD utilises four cameras and an IMU to perform SLAM.

An example of a visual-based SLAM is Maplab, which is described in "Maplab: An Open Framework for Research in Visual-Inertial Mapping and Localization", by T. Schneider, M. Dymczyk, M. Fehr, K. Egger, S. Lynen, I. Gilitschenski, and R. Siegwart, IEEE Robotics and Automation Letters, vol. 3, no. 3, pages 1418-1425, 2018. An example of depth-based SLAM is Segmap, as described in "SegMap: 3D Segment Mapping Using Data-Driven Descriptors", by R. Dubé, A. Cramariuc, D. Dugas, J. Nieto, R. Siegwart, and C. Cadena, arXiv:1804.09557, DOI: 10.15607/RSS.2018.XIV.003, 2018.

SLAM allows exploring the physical, real-world space around the mobile device, including indoor and outdoor navigation without relying on GPS (Global Positioning System), which typically is not accurate inside buildings.

The SLAM algorithm can be used for AR, for capturing and storing a localisation map used for AR applications, e.g., for placing virtual objects in a room and allowing these objects to virtually remain in the room for the user to find when returning to the room. Moreover, SLAM allows the AR devices to localize themselves inside a room or a building and continuously perform six-degrees-of-freedom tracking of the user so that the user can interact with virtual objects.

The localisation map used for localisation can contain different regions which contain features that are similar, e.g., rooms that are very similar with respect to visual and/or structural features. Since localisation is based on comparing visual and/or structural information captured by sensors with features of a localisation map, there is a risk, when performing localisation in a region which is similar to another region, that the mobile device determines itself to be in the incorrect of the similar regions.

"Feature selection for reliable data association in visual SLAM", by Z. Shi et al., Machine Vision and Applications, vol. 24, pages 667-682, Springer, 2013, discloses a method for feature selection in visual simultaneous localization and mapping (SLAM) which is based on the potential data association cost. It relies on a mechanism termed predictive virtual matching test, which measures the goodness of any new feature by examining the predictive repeatability and compatibility with the other features and potential candidates. For each new feature, the test is conducted in its predictive virtual search region (PVSR) in the image frame where the feature is initially detected. The relationship between PVSR and the predicted search window determined by the next time step's innovation covariance matrix is analyzed theoretically through backward inference. Since the process of feature selection is directly guided by the requirement of subsequent data association, it can automatically adapt to the time-varying uncertainty underlying the SLAM state estimate.

WO 2018/027206 A1 discloses location estimation methods which may facilitate the task of efficiently finding the location of a mobile platform in scenarios in which the uncertainties associated with the coordinates of the map features are anisotropic and/or nonproportional, and/or facilitate decoupling of location estimation from feature estimation. Some feature estimation methods may facilitate the combining of environmental descriptions provided by two or more mobile platforms, and/or facilitate decoupling of a data aggregation from feature re-estimation.

### SUMMARY

An object of the invention is to reduce the risk of incorrect localisation due to similar regions in a localisation map.

The invention is directed to a method for supporting localisation of a mobile device according to claim 1, to a map server for supporting localisation of a mobile device according to claim 4, to a computer program for supporting localisation of a mobile device according to claim 7 and to a computer program product according to claim 8.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise.

### BRIEF DESCRIPTION OF THE DRAWINGS

Aspects and embodiments are now described, by way of example, with reference to the accompanying drawings, in which:
Fig 1 schematically illustrates an environment in which embodiments of the invention can be applied;
Fig 2 schematically illustrates similar regions, in accordance with embodiments of the invention;
Fig 3 schematically illustrates input and output of the map server for supporting localisation of a mobile device, in accordance with embodiments of the invention;
Figs 4A-B are flow charts illustrating embodiments of methods for supporting localisation of a mobile device, in accordance with embodiments of the invention;
Fig 6 schematically illustrates functional modules of the map server for supporting localisation of a mobile device, in accordance with embodiments of the invention; and
Fig 7 shows an example of a computer program product comprising a storage medium, in accordance with embodiments of the invention.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting. Like numbers refer to like elements throughout the description.

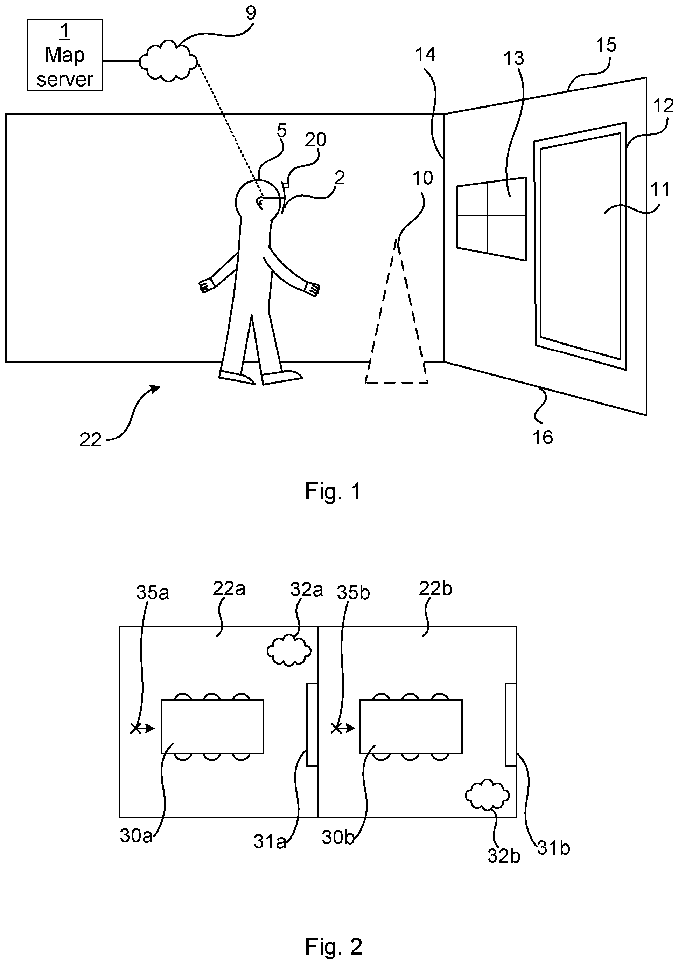

Fig 1 is a schematic diagram illustrating an environment in which embodiments of the invention can be applied. A region 22 shown in Fig 1 is a physical space used in an AR context. A region is a defined as a delimited three-dimensional (3D) or two-dimensional (2D) space.

A user 5 wears or carries a mobile device 2, such as a head mounted display (HMD), which allows the user 5 to see both real-world objects 11-16 and a virtual object 10. Virtual objects are rendered by the mobile device 2 and do not exist as physical objects. The mobile device 2 contains sensors (e.g. accelerometers, gyros, etc.), e.g., as part of an inertia measurement unit (IMU). The IMU is used to obtain motion and/or orientation data which contributes to determining the pose of the mobile device 2 in a physical space. The mobile device 2 could also be implemented using a smartphone, a tablet computer, an autonomous vehicle (e.g., robot), or a remote-controlled vehicle.

The mobile device 2 comprises one or more environment sensors 20 for capturing images and/or depth data of the environment around the user 5. Each environment sensor can e.g. be implemented as a camera (2D or depth camera), lidar, radar, etc.

The mobile device 2 is connected to a network 9. The network 9 can e.g. comprise any one or more of a local area network (LAN), a wide area network (WAN) such as the Internet and a cellular network. A map server 1 is also connected to the network 9.

The map server 1 is responsible for storing (locally or remotely) localisation maps and providing localisation maps to mobile devices 2. Moreover, the map server 1 updates and builds the localisation maps based on visual and/or structural features detected and reported by mobile devices 2. The map server 1 is responsible for modifying localisation maps, as described in more detail below, to reduce similarities between regions that have similar features.

Around the mobile device, there are several elements detectable by the one or more environment sensors 20, using visual and/or depth information captured by sensors. The elements shown in the example of Fig 1 include a door 11, a doorframe 12, and a window 13. Moreover, there are other elements such as a corner 14 between walls, a ceiling line 15, and a floor line 16. Each element 11-16 can be represented by one or more features in the localisation map. In the localisation map, each feature comprises location/position data and geometric characteristics. The location data can be relative and/or absolute. The geometric characteristics can define the shape or vertex characteristics of the feature.

The localisation map (2D or 3D) is obtained from a storage of the mobile device 2 and/or the map server 1. The mobile device 2 captures data using the environment sensor(s) 20. The captured data is used to derive features, which are compared with the map features in the localisation map provided by the map server to allow the mobile device to be localized within the environment, i.e., to determine its pose, optionally also using data from the IMU.

A localisation map is a set of data which is used for localisation purposes. For example, a localisation map may be defined as a graph comprising features represented in one or more vertices.

For instance, each vertex can encode a feature which are observed for that vertex. Vertices are connected in the graph via edges, where a connection exists between two vertices when they contain overlapping features (e.g., the same feature can be observed from both vertices). The edges may also encode odometry information that describe the motion performed to move from one vertex to another. For each vertex, only the features which are robustly observed can be stored, to avoid storing features which are not stable or are erroneously detected. In some cases, such selected features are also known as landmarks.

A feature F can be represented by its pose and its descriptor, F = [p, V], where p is the pose and V is the descriptor. The descriptor is typically a number/code-word (e.g., 32 bit) that describes a feature. For example, the descriptor can comply with SIFT (Scale-invariant feature transform), BRISK (Binary Robust Invariant Scalable Keypoints), ORB (Object Request Broker), or a nomenclature for use with machine-learning, which are different ways of describing features in an image. Alternatively or additionally, the descriptor is adapted to structural information, e.g., for point clouds.

Feature descriptors (e.g., SIFT, BRISK, ORB, or machine learning-based) can describe regions with specific properties of an image, such as edges, corners, etc., or 3D point clouds. A K-Nearest Neighbours (KNN) search can be performed based on the descriptors which are inferred from the sensor data and the map data, where BRISK descriptors are used in Maplab and machine learning based descriptors are trained and used in Segmap.

Each feature is thus defined by at least location data and geometric characteristics. The location data of the feature is an absolute or relative position and can contain orientation data. Position and orientation are collectively known as pose. The geometric characteristics can contain one or more vertices and zero or more edges, and odometry information which describes the connection between two vertices. The localisation map can thus be a topological map, which does not need to be a geometrically accurate map. The localisation map may also contain additional information such as keyframes where the features can be visualised, among other information, but this type of information is not directly exploited by embodiments presented herein and is not described further.

The features derived from captured visual and/or structural data and the map features can correspond to any subset (or all) of the elements 11-16. It is to be noted that the derived features vary depending on where the mobile device 2 is located and the orientation and field-of-view of the environment sensor(s) 20. Mapping can occur simultaneously, whereby the location data is updated and provided to the map server 1. A process of mapping an area while keeping track of a current position and orientation, i.e., the pose, of a mobile device within the area is known as Simultaneous Localisation and Mapping, or SLAM. While we sometimes refer to SLAM in the examples herein, the embodiments presented herein can be used with any current or future localisation procedure which is based on environmental information capture.

Once the location and/or orientation of the mobile device is determined, this can be used, e.g., for AR purposes.

The localisation map can contain different regions which contain features that are similar, e.g., in rooms that are very similar. Since the localisation is based on features derived from captured visual and/or structural data obtained from the environment sensor(s) 20, there is a risk that the localisation algorithm determines a position within an incorrect region. According to embodiments presented herein, when regions comprising similar features are found, the map server modifies the localisation map to reduce the risk of incorrect localisation.

It is to be noted that the environment of Fig 1 is only one example of where localisation based on localisation maps can be applied. Embodiments presented herein can equally well be applied in other environments, such as for self-driving vehicles, industrial applications, indoor robotics, etc.

Fig 2 is a schematic diagram illustrating similar regions of a localisation map, in accordance with embodiments of the invention.

A first region 22a is here a first conference room in an office building. A second region 22b is a second conference room in the same office building.

The first region 22a (the first conference room) contains a first table 30a, a first whiteboard 31a and a first plant 32a. The second region 22b (the second conference room) contains a second table 30b, a second whiteboard 31b and a second plant 32b. Both tables 30a, 30b, both whiteboards 31a, 31b and both plants 32a, 32b are represented by features in a localisation map.

Consider a situation when a mobile device 2 is in a first position 35a or in a second position 35b. In both positions, the mobile device 2 has environment sensors pointing toward the respective whiteboard 31a, 31b. In the first position 35a, the mobile device 2 can detect features representing the first table 30a, the first whiteboard 31a and the first plant 32a. In the second position 35b, the mobile device 2 can detect features representing the first table 30a, the first whiteboard 31a and the first plant 32a.

In the two regions 22a, 22b, the tables 30a, 30b are in corresponding positions within the room, i.e., the tables 30a, 30b are in the same relative position. Moreover, in the two regions 22a, 22b, the whiteboards 31a, 31b are in the corresponding positions within the room, i.e., in the same relative position. The only elements (of the three elements mentioned here) that are in different relative positions between the two regions are the plants 32a, 32b, which are in two different locations in relation to the respective whiteboards 31a, 31b. Hence, the two regions 22a, 22b have certain similar features in common.

Since the two regions 22a, 22b have similar features, there is a risk that the mobile device 2 incorrectly determines the location to be the first position 35a when the mobile device is actually in the second position 35b, or vice versa. Features are similar if they have similar visual or structural properties, as defined by the descriptor of said features. In the feature descriptor space, two features are similar if descriptors are closer than a given threshold.

According to the invention, the location map is modified to reduce the similarity of regions which have similar features, as explained in more detail below. According to the invention, the weight , which defines an extent to which a feature is relied on in localisation, of the similar features, e.g., the tables 30a, 30b or the whiteboards 31, 31b, are reduced in either or both regions 22a, 22b. In this way, the plants 32a, 32b, which differ between the two regions 22a, 22b have a greater relative impact during localisation, thereby reducing the risk of incorrect localisation. It is to be noted that it is sufficient to reduce a relative weight of the similar features in relation to other (non-similar) features. Hence, instead of reducing the (absolute) weight of the similar features, the (absolute) weight of other features can be increased.

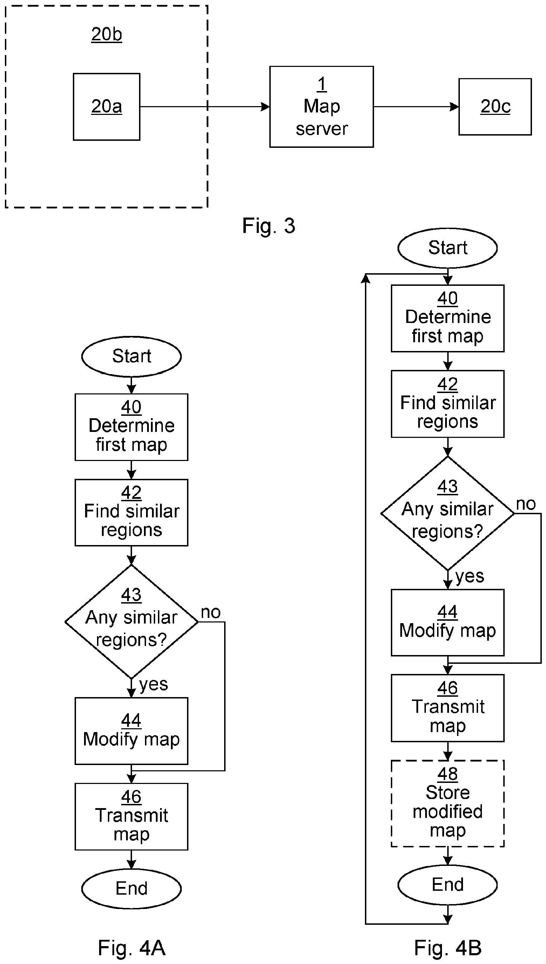

Fig 3 is a schematic diagram illustrating input and output of the map server 1 of Fig 1. The map server 1 here determines a local localisation map 20a to use. Based on embodiments described below, the local localisation map 20a is modified to reduce similarities between regions containing similar features, resulting in a modified local localisation map 20a'.

Optionally, the local localisation map is a strict subset of a second localisation map 20b. For instance, the second localisation map 20b can be a large localisation map which covers a large area, e.g. a city or a suburb, and the local localisation map 20a covers a building, or a floor of a building. In this case, the map server 1 determines the local localisation map 20a based on a location of the mobile device, e.g., based on GPS (Global Positioning System) coordinates, a beacon, an access point of a WLAN (Wireless Local Area Network) or Wi-Fi network, or a base station of a cellular network.

Figs 4A-B are flow charts illustrating embodiments of methods for supporting localisation of a mobile device. The localisation is based on a localisation map comprising a number of features. Each feature in the localisation map comprises location data and geometric characteristics. The method can be triggered when a localisation map is to be provided by the map server to the mobile device 2, e.g., as the result of a request from the mobile device 2 or based on the mobile device entering a defined area or zone. Even if the mobile device locally stores a localisation map, it is beneficial to request an updated localisation map since localisation maps can improve over time based on visual and/or structural information captured by other mobile devices which are merged with an existing localisation map.

In a *determine first map* step 40, the map server determines a local localisation map 20a based on a location of the mobile device 2. The location of the mobile device 2 may be based on GPS, a beacon, an access point of a WLAN or Wi-Fi network, or a base station of a cellular network. Alternatively, if the map server 1 is (or is part) of a network edge device placed in a cellular radio base station, the base station can determine a general location of the mobile device 2, e.g., with an accuracy of a few hundreds of meters down to a few meters, based on a coverage range of a cell.

The local localisation map can be selected to be a localisation map containing regions located within X meters of the estimated device location. Alternatively, the local localisation map can be selected to be a localisation map containing regions located on a floor of a building, a section of a building bound by a single corridor, one or more rooms, etc.

In one embodiment, the local localisation map 20a is a strict subset of a second localisation map 20b. As explained above, the second localisation map 20b may be a large localisation map which covers a large area, e.g., a city or a suburb, and the local localisation map 20a covers a building, or a floor of a building. In some contexts, the larger, second localisation map 20b is denoted a global localisation map (even though the second localisation map may indeed be geographically limited) and the smaller, first, localisation map 20a is denoted a local localisation map.

In *a find similar regions* step 42, the map server 1 finds, in the local localisation map 20a, at least a first region 22a and a second region 22b which comprise one or more similar features.

The finding at least a first region 22a and a second region 22b which comprise similar features is performed by the map server 1 and is based on an algorithm of a SLAM procedure which is usable by the mobile device 2 to compare features derived from captured visual and/or structural data with features in a localisation map. In other words, the same SLAM procedure that is used by the mobile device 2 is used by the map server to find the similar features. Checking for visual and/or structural similarities is implemented in every SLAM algorithm, to enable localisation using a localisation map by comparing features derived from captured visual and/or structural data with features in a localisation map. This comparison can be both applied to images (e.g., Maplab) and/or depth data (e.g., Segmap). In both these SLAM frameworks, a KNN (k-nearest neighbour) search is performed based on descriptors inferred from the captured data and the localisation map data. Other SLAM frameworks using other methods can equally well be used to perform this step.

The following description of finding similar regions is based on the use of the same SLAM procedure that is used by the mobile device 2 for localisation. In this way, when the map server 1 determines that two regions are similar, the two regions would also be determined to be similar by the mobile device 2, and thus pose a risk for incorrect localisation. To evaluate visual and/or structural similarity, features in two regions of the local localisation map are compared using the SLAM algorithm which is being used by the mobile device 2, with the same parameters set. In this way, so called relocalisation or loop-closure routines of the SLAM algorithm is performed on the two sets of data to check if a match occurs. Relocalisation or loop closure is when the SLAM algorithm finds a match between sensor data and local localisation map data. This comparison is then repeated iteratively to compare several different regions of the local localisation map. If local localisation map is a graph-based map, each region can be determined as a set S of N vertices. Similarity can then be evaluated of this set S against the complete graph of the local localisation map.

In one embodiment, the map server 1 analyses only new visual and/or structural features which have been captured by other mobile devices since the preceding iteration of the find *similar features* step 42. In this way, another exhaustive search over the local localisation map is avoided.

In one embodiment, given incoming sensor data or pose data from the mobile device 2 to the map server 1, the map server 1 may determine that the location of the mobile device 2 within the local localisation map is determined more accurately. This allows the search to be narrowed down further into a smaller region, i.e., a subset of the local localisation map. In this case, the search for similar features regions is reduced to the new estimated region of where the mobile device 2 may be located. This saves computational resources and processing time for the similarity search.

The two regions do not need to have identical features for the two regions 22a, 22b to be considered similar. Rather, it suffices that the two regions are more similar than a threshold value. This is consistent with the use of the SLAM procedure (usable by the mobile device), where captured features are compared with features of a localisation map and the match does not need to be perfect for a localisation to occur. The reason for this is that some features can have changed (e.g., moved plants/furniture) or one or more features can be blocked by people or objects.

Optionally, the map server 1 receives information from one or more mobile devices 2 to assist in the finding of regions with similar features. For instance, when a mobile device 2 detects the occurrence of a number of incorrect localisations which exceeds a certain threshold, this can be reported to the map server 1. In such reporting, details of the incorrect localisation(s) are included, defining where the mobile device 2 was incorrectly localised to and where (once the incorrect localisation was determined) the user device 2 was after a redetermination. This is an indicator of regions with similar features.

An incorrect localisation can, e.g., be detected when two consecutive poses of the mobile device given by the SLAM algorithm differ by a distance or orientation which is larger than X meters and/or R degrees, respectively. Such incorrect localisation by a mobile device can optionally be used as a trigger for supporting localisation of mobile device in accordance with embodiments of the invention described herein.

In a conditional *any similar regions* step 43, the map server 1 determines whether any similar regions were found in the preceding step. If this is the case, the method proceeds to a *modify map* step 44. Otherwise, the method proceeds to a *transmit map* step 46.

In the *modify map* step 44, the map server 1 modifies the local localisation map 20a to reduce similarity between the first region 22a and the second region 22b, resulting in a modified local localisation map 20a'.

In one embodiment, the modification of the local localisation map comprises adjusting a weight of at least one feature in at least one of the first region 22a and the second region 22b. Each one of this at least one feature is similar to a feature in the other of the first region 22a and the second region 22b. For instance, with reference to Fig 2, the feature of the first table 30a in the first region 22a is similar to the feature of the second table 30b in the second region 22b. As a result, the weight of the first table 30a or the second table 30b may be modified.

According to the invention, the weight of a plurality of features which have been determined to be similar to a corresponding feature in the other region (e.g. the tables 30a, 30b of Fig 2) are adjusted. According to the invention, the weight adjustment is performed such that a difference between the number of features for which weights are reduced in the first region 22a and the number of features for which weights are reduced in the second region 22b is at most one. In other words, according to the invention the number of features adjusted in the first region 22a is balanced with the number of features adjusted in the second region 22b. In this way, the modifications to the first region and the second region are about the same, whereby localisation ability is affected similarly in the two regions. Weight reduction of features can have a negative impact on SLAM localisation, since the existing localisation map is used to a less degree for localisation. In this embodiment, this impact on SLAM localisation is balanced between the two regions.

In one embodiment, the weight of a plurality of features which have been determined to be similar to a corresponding feature in the other region (e.g. the tables 30a, 30b of Fig 2) are adjusted. In this embodiment, the weight adjustment is performed such that a difference between a number of fully active features in the first region 22a and a number of fully active features in the second region 22b is at most one. A fully active feature is defined as a feature which weight has not been reduced and can accordingly be used for localisation without limitation. In other words, the number of features that are adjusted such that, after the adjustment, the number of fully active features is balanced between the first region 22a and the second region 22b. In this way, the localisation ability after adjustment is about the same in the two regions. For instance, if the first region contains many more fully active features than the second region, then the weights of more features (which have been determined to be similar to features in the other region) in the first region are reduced than in the second region.

It is to be noted that adjusting a weight may imply reducing an absolute value of the weight. Alternatively, adjusting a weight may imply increasing respective weights of other features, effectively reducing the weight of the feature.

In one embodiment, the modification of the local localisation map comprises reducing the weights of all features in the first region 22a and in the second region 22b.

In one embodiment, the modification of the local localisation map 20a comprises reducing the weights of all features in the first region 22a and in the second region 22b that are pair-wise similar in the first region 22a and the second region 22b.

The adjusting of a weight of a feature can be deactivating the feature. The deactivating the feature can imply removing the feature from a localisation map. Alternatively, the deactivating the feature can imply setting the weight of the feature to zero. When features are removed from the localisation map, the computational requirement at the mobile device is reduced and the size of the local localisation map is reduced.

In one embodiment, the extent of weight adjustment is based on an extent of similarity between the features that are pair-wise similar in the first region 22a and the second region 22b. For instance, a weight W can be assigned to each feature (or region) in the local localisation map, where W is in the range [0, 1]. A weight of 0 implies that the feature is not considered at all for localisation and a weight of 1 implies that the feature is fully active, i.e., considered for localisation without limitation. In one embodiment, the weight W can be computed based on the matching algorithm described in the *find similar regions* step 42. In this case, a distance D in feature space between two features is used, and the distance in feature space is given by the KNN algorithm which is a standard procedure when using a KNN algorithm and is used for instance by Maplab and Segmap. As an example, if two features A and B are closer than a configured minimum distance Dmin, this means that they have a high probability of being found to be similar, in which case W is set to zero for both features. If the distance lies between Dmin and a configured maximum distance Dmax, then W is set to a value between zero and one for both features, and if the distance is larger than Dmax, which implies that there is a very low probably of being a match, then W is set to one for both features.

In one embodiment, the map server 1 can detect that the modifications to the localisation map result in a region losing too much feature information, e.g., defined by there being less than a threshold density of features in the region. In this case, the mobile device may not be able to reliably perform localisation in that region, whereby the map server 1 sends an indicator to indicate the low feature condition in a specific region to the mobile device. The mobile device can still perform localization and mapping within this region but will not attempt to perform loop closure when near the specified region. The mobile device would then mainly perform mapping to improve the localisation map when in that region.

In the *transmit map* step 46, the map server 1 transmits the modified local localisation map 20a' to the mobile device 2. If there is no modification of the local localisation map (i.e., the conditional *any similar regions* step 43 results in a negative determination), the local localisation map 20a is transmitted without modifications to the mobile device 2.

The mobile device 2 can then perform localisation based on the modified local localisation map.

Referring now to Fig 4B, only new or modified steps compared to the steps of Fig 4A will be described.

In an optional *store modified map* step 48, the map server 1 stores the modified local localisation map 20a' as a starting point for use in subsequent iterations of the method described hereinabove. Hence, when the next iteration is performed, the previously determined similarities can already be used as a starting point when similarities are to be found again within the first localisation map. Hence, only new or modified features need to be considered when assessing similarity of regions. In this way, computational effort for finding similarities is greatly reduced for subsequent iterations.

An example to illustrate embodiments presented herein will now be described. A mobile device starts to localise itself using its visual sensors, or other types of environment sensors. The mobile device is located in one of several meeting rooms in an office, where the meeting rooms are furnished in similar ways, and the map server only knows that the mobile device is inside a building. The map server sends a localisation map which contains map information for the building to the mobile device. In this example, the mobile device is oriented towards a wall in one of the meeting rooms, where two of the walls in this room have 80% of the extracted visual features similar to another meeting room in the same building. If the map server has not implemented one of the embodiments presented herein, the mobile device may localise itself in the incorrect room, or it will not be able to make a decision with regard to within which room it is located. As the mobile device moves, the mobile device will keep trying to conclude where it is, by continuing to evaluate newly detected features against the localisation map using a KNN descriptor matching algorithm, which can be further complemented by computationally costly co-visibility clustering techniques and PnP-Ransac verification.

When embodiments presented herein are implemented, the localisation map sent from the map server to the mobile device is a modified localisation map according to the above, where similarities between similar regions have been reduced. The mobile device thus has a much greater chance of correctly localising itself in either of the locations, since 20% of the features which remain in the localisation map for each of the walls in the two rooms are not visually and/or structurally similar. Hence, the localisation is made upon receiving the modified localisation map, and no motion will be required to further conclude on the right location, which saves computational effort, power and time for localisation.

Using embodiments presented herein, the risk of incorrect localisations when there are regions with similar features is greatly reduced. Significantly, the solution does not depend on any external localisation, such as GPS, cell tower or access point identifiers, or WiFi fingerprinting, which may or may not be available. Moreover, the localisation does not need require further movement of the mobile device. Hence, the presented embodiments are more reliable and more robust compared to solutions relying on external infrastructure, and faster and more computationally effective than solutions relying on continued movement of the mobile device. Moreover, by modifying the localisation map to reduce similarities between regions, the amount of computations the mobile device has to perform in order to handle similarities is reduced (e.g., to check for spatial and temporal consistency in regions, given that two regions are similar). This reduction in computation saves energy and increases responsiveness.

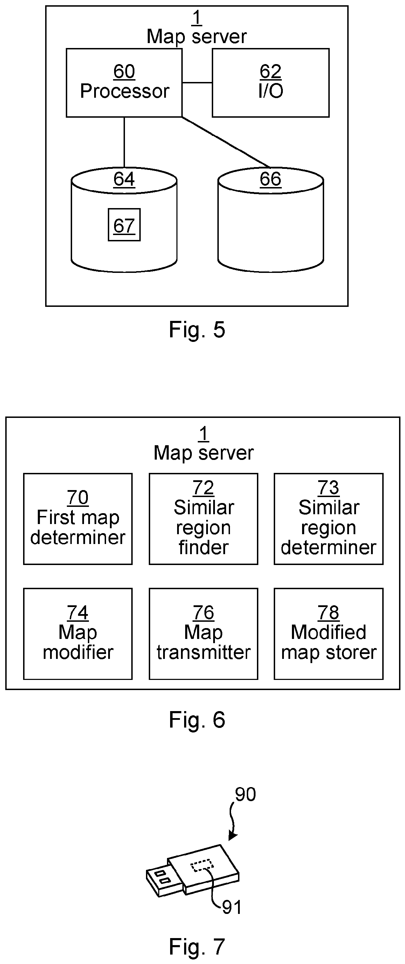

Fig 5 is a schematic diagram illustrating components of the map server 1 of Fig 1. A processor 60 is provided using any combination of one or more of a suitable central processing unit (CPU), multiprocessor, microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 can be configured to execute the method described with reference to Figs 4A-B above.

The memory 64 can be any combination of random-access memory (RAM) and/or read-only memory (ROM). The memory 64 also comprises persistent storage, which, for example, can be any single one or combination of magnetic memory, optical memory, solid-state memory or even remotely mounted memory.

A data memory 66 is also provided for reading and/or storing data during execution of software instructions in the processor 60. The data memory 66 can be any combination of RAM and/or ROM.

The map server 1 further comprises an I/O interface 62 for communicating with external and/or internal entities. Optionally, the I/O interface 62 also includes a user interface.

Other components of the map server 1 are omitted in order not to obscure the concepts presented herein.

Fig 6 is a schematic diagram showing functional modules of the map server 1 of Fig 1 according to one embodiment. The modules are implemented using software instructions such as a computer program executing in the map server 1. Alternatively or additionally, the modules are implemented using hardware, such as any one or more of an ASIC (Application Specific Integrated Circuit), an FPGA (Field Programmable Gate Array), or discrete logical circuits. The modules correspond to the steps in the methods illustrated in Figs 4A and Fig 4B.

A first map server 70 corresponds to step 40. A similar region finder 72 corresponds to step 42. A similar region determiner 73 corresponds to step 43. A map modifier 74 corresponds to step 44. A map transmitter 76 corresponds to step 46. A modified map storer 78 corresponds to step 48.

Fig 7 shows one example of a computer program product 90 comprising a storage medium. On this storage medium, a computer program 91 can be stored, which computer program can cause a processor to execute a method according to embodiments described herein. In this example, the computer program product is in the form of a removable solid-state memory, e.g., a Universal Serial Bus (USB) drive. As explained above, the computer program product could also be embodied in a memory of a device, such as the computer program product 64 of Fig 4. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## Claims

1. A method for supporting localisation of a mobile device (2) based on a local localisation map comprising a number of features, wherein each feature comprises location data and geometric characteristics of the feature, the method comprising:
determining (40) a local localisation map (20a) based on a location of the mobile device (2);
finding (42), in the local localisation map (20a), at least a first region (22a) and a second region (22b) which comprise similar features, based on an algorithm of a simultaneous localisation and mapping, SLAM, procedure which is usable by the mobile device (2) to compare features derived from captured visual and/or structural data with features in the local localisation map;
**characterized by** further comprising:
modifying (44) the local localisation map (20a) to reduce similarity between the first region (22a) and the second region (22b), by reducing a weight of a plurality of features, each of which is in the first region (22a) or the second region (22b) and which is similar to another feature in the other of the first region (22a) and the second region (22b), wherein the number of features for which weights are reduced in the first region (22a) is balanced with the number of features for which weights are reduced in the second region (22b), wherein the weight defines an extent to which the associated feature is relied on for localisation of the mobile device (2); and
transmitting (46) the modified local localisation map (20a') to the mobile device (2).

2. The method according to claim 1, wherein the reducing of the weight of a feature comprises setting the weight of the feature to zero or removing the feature from the local localisation map.

3. The method according to claim 1 or 2, wherein the extent of each weight reduction is based on an extent of similarity between the features that are pair-wise similar in the first region (22a) and the second region (22b).

4. A map server (1) for supporting localisation of a mobile device (2) based on a local localisation map comprising a number of features, wherein each feature comprises location data and geometric characteristics, the map server (1) comprising:
a processor (60); and
a memory (64) storing instructions (67) that, when executed by the processor, cause the map server (1) to:
determine the local localisation map (20a) based on a location of the mobile device (2);
find, in the local localisation map (20a), at least a first region (22a) and a second region (22b) which comprise similar features, based on an algorithm of a simultaneous localisation and mapping, SLAM, procedure which is usable by the mobile device (2) to compare features derived from captured visual and/or structural data with features in the local localisation map;
**characterized by** the instructions, when executed by the processor, further causing the map server to: I
modify the local localisation map (20a) to reduce similarity between the first region (22a) and the second region (22b) by reducing a weight of a plurality of features, each of which is in the first region (22a) or the second region (22b) and which is similar to another feature in the other of the first region (22a) and the second region (22b), wherein the number of features for which weights are reduced in the first region (22a) is balanced with the number of features for which weights are reduced in the second region (22b), wherein the weight defines an extent to which the associated feature is relied on for localisation of the mobile device (2); and
transmit the modified local localisation map (20a') to the mobile device (2).

5. The map server (1) according to claim 4, wherein the instructions to reduce the weight of a feature comprise instructions (67) that, when executed by the processor, cause the map server (1) to setting the weight of the feature to zero or to remove the feature from the local localisation map.

6. The map server (1) according to claim 4 or 5, wherein the extent of each weight adjustment is based on an extent of similarity between the features that are pair-wise similar in the first region (22a) and the second region (22b).

7. A computer program (67, 91) for supporting localisation of a mobile device (2) based on a local localisation map comprising a number of features, wherein each feature comprises location data and geometric characteristics, the computer program comprising computer program code which, when executed on a map server (1) causes the map server (1) to:
determine a local localisation map (20a) based on a location of the mobile device (2);
find, in the local localisation map (20a), at least a first region (22a) and a second region (22b) which comprise similar features, based on an algorithm of a simultaneous localisation and mapping, SLAM, procedure which is usable by the mobile device (2) to compare features derived from captured visual and/or structural data with features in the local localisation map;
**characterized by** the computer program code, when executed on the map server, further causing the map server to: I
modify the local localisation map (20a) to reduce similarity between the first region (22a) and the second region (22b), by reducing a weight of a plurality of features, each of which is in the first region (22a) or the second region (22b) and which is similar to another feature in the other of the first region (22a) and the second region (22b), wherein the number of features for which weights are reduced in the first region (22a) is balanced with the number of features for which weights are reduced in the second region (22b), wherein the weight defines an extent to which the associated feature is relied on for localisation of the mobile device (2); and
transmit the modified local localisation map (20a') to the mobile device (2).

8. A computer program product (64, 90) comprising a computer program according to claim 7 and a storage medium on which the computer program is stored.

## Patentansprüche

1. Verfahren zur Unterstützung der Lokalisierung einer mobilen Vorrichtung (2) basierend auf einer lokalen Lokalisierungskarte, die eine Anzahl von Merkmalen umfasst, wobei jedes Merkmal Standortdaten und geometrische Charakteristiken des Merkmals umfasst, wobei das Verfahren umfasst:
Bestimmen (40) einer lokalen Lokalisierungskarte (20a) basierend auf einem Standort der mobilen Vorrichtung (2) ;
Ermitteln (42) in der Lokalisierungskarte (20a) mindestens einer ersten Region (22a) und einer zweiten Region (22b) mit ähnlichen Merkmalen basierend auf einem Algorithmus einer simultanen Lokalisierungs- und Kartierungsprozedur, SLAM-Prozedur, die von der mobilen Vorrichtung (2) verwendet werden kann, um von erfassten visuellen und/oder strukturellen Daten abgeleitete Merkmale mit Merkmalen in der lokalen Lokalisierungskarte zu vergleichen;
**dadurch gekennzeichnet, dass** es ferner umfasst:
Modifizieren (44) der lokalen Lokalisierungskarte (20a), um eine Ähnlichkeit zwischen der ersten Region (22a) und der zweiten Region (22b) zu reduzieren, indem ein Gewicht einer Mehrzahl von Merkmalen reduziert wird, von welchen sich jedes in der ersten Region (22a) oder der zweiten Region (22b) befindet und einem anderen Merkmal in der anderen der ersten Region (22a) und der zweiten Region (22b) ähnelt, wobei die Anzahl von Merkmalen, für die Gewichte in der ersten Region (22a) reduziert werden, mit der Anzahl von Merkmalen ausgeglichen wird, für die Gewichte in der zweiten Region (22b) reduziert werden, wobei das Gewicht ein Ausmaß definiert, bis zu dem auf das zugehörige Merkmal zur Lokalisierung der mobilen Vorrichtung (2) vertraut werden kann; und
Senden (46) der modifizierten lokalen Lokalisierungskarte (20a') an die mobile Vorrichtung (2) .

2. Verfahren nach Anspruch 1, wobei das Reduzieren des Gewichts eines Merkmals ein Setzen des Gewichts des Merkmals auf null oder Entfernen des Merkmals aus der lokalen Lokalisierungskarte umfasst.

3. Verfahren nach Anspruch 1 oder 2, wobei das Ausmaß jeder Gewichtsreduktion auf einem Ausmaß der Ähnlichkeit zwischen den Merkmalen basiert, die in der ersten Region (22a) und der zweiten Region (22b) einander paarweise ähneln.

4. Kartenserver (1) zum Unterstützen der Lokalisierung einer mobilen Vorrichtung (2) basierend auf einer lokalen Lokalisierungskarte, die eine Anzahl von Merkmalen umfasst, wobei jedes Merkmal Standortdaten und geometrische Charakteristiken des Merkmals umfasst, wobei der Kartenserver (1) umfasst:
einen Prozessor (60); und
einen Speicher (64), der Anweisungen (67) speichert, die bei Ausführung durch den Prozessor den Kartenserver (1) veranlassen zum:
Bestimmen der lokalen Lokalisierungskarte (20a) basierend auf einem Standort der mobilen Vorrichtung (2) ;
Ermitteln in der Lokalisierungskarte (20a) mindestens einer ersten Region (22a) und einer zweiten Region (22b) mit ähnlichen Merkmalen basierend auf einem Algorithmus einer simultanen Lokalisierungs- und Kartierungsprozedur, SLAM-Prozedur, die von der mobilen Vorrichtung (2) verwendet werden kann, um von erfassten visuellen und/oder strukturellen Daten abgeleitete Merkmale mit Merkmalen in der lokalen Lokalisierungskarte zu vergleichen;
**dadurch gekennzeichnet, dass** die Anweisungen bei Ausführung durch den Prozessor den Kartenserver ferner veranlassen zum:
Modifizieren der lokalen Lokalisierungskarte (20a), um eine Ähnlichkeit zwischen der ersten Region (22a) und der zweiten Region (22b) zu reduzieren, indem ein Gewicht einer Mehrzahl von Merkmalen reduziert wird, von welchen sich jedes in der ersten Region (22a) oder der zweiten Region (22b) befindet und einem anderen Merkmal in der anderen der ersten Region (22a) und der zweiten Region (22b) ähnelt, wobei die Anzahl von Merkmalen, für die Gewichte in der ersten Region (22a) reduziert werden, mit der Anzahl von Merkmalen ausgeglichen wird, für die Gewichte in der zweiten Region (22b) reduziert werden, wobei das Gewicht ein Ausmaß definiert, bis zu dem auf das zugehörige Merkmal zur Lokalisierung der mobilen Vorrichtung (2) vertraut werden kann; und
Senden der modifizierten lokalen Lokalisierungskarte (20a') an die mobile Vorrichtung (2).

5. Kartenserver (1) nach Anspruch 4, wobei die Anweisungen zum Reduzieren des Gewichts eines Merkmals Anweisungen (67) umfassen, die bei Ausführung durch den Prozessor den Kartenserver (1) zum Setzen des Gewichts des Merkmals auf null oder zum Entfernen des Merkmals aus der lokalen Lokalisierungskarte veranlassen.

6. Kartenserver (1) nach Anspruch 4 oder 5, wobei das Ausmaß jeder Gewichtsanpassung auf einem Ausmaß der Ähnlichkeit zwischen den Merkmalen basiert, die in der ersten Region (22a) und der zweiten Region (22b) einander paarweise ähneln.

7. Computerprogramm (67, 91) zum Unterstützen der Lokalisierung einer mobilen Vorrichtung (2) basierend auf einer lokalen Lokalisierungskarte, die eine Anzahl von Merkmalen umfasst, wobei jedes Merkmal Standortdaten und geometrische Charakteristiken des Merkmals umfasst, wobei das Computerprogramm Computerprogrammcode umfasst, der bei Ausführung auf einem Kartenserver (1) den Kartenserver (1) veranlasst zum:
Bestimmen einer lokalen Lokalisierungskarte (20a) basierend auf einem Standort der mobilen Vorrichtung (2) ;
Ermitteln in der Lokalisierungskarte (20a) mindestens einer ersten Region (22a) und einer zweiten Region (22b) mit ähnlichen Merkmalen basierend auf einem Algorithmus einer simultanen Lokalisierungs- und Kartierungsprozedur, SLAM-Prozedur, die von der mobilen Vorrichtung (2) verwendet werden kann, um von erfassten visuellen und/oder strukturellen Daten abgeleitete Merkmale mit Merkmalen in der lokalen Lokalisierungskarte zu vergleichen;
**dadurch gekennzeichnet, dass** der Computerprogrammcode bei Ausführung auf dem Kartenserver den Kartenserver ferner veranlasst zum:
Modifizieren der lokalen Lokalisierungskarte (20a), um eine Ähnlichkeit zwischen der ersten Region (22a) und der zweiten Region (22b) zu reduzieren, indem ein Gewicht einer Mehrzahl von Merkmalen reduziert wird, von welchen sich jedes in der ersten Region (22a) oder der zweiten Region (22b) befindet und einem anderen Merkmal in der anderen der ersten Region (22a) und der zweiten Region (22b) ähnelt, wobei die Anzahl von Merkmalen, für die Gewichte in der ersten Region (22a) reduziert werden, mit der Anzahl von Merkmalen ausgeglichen wird, für die Gewichte in der zweiten Region (22b) reduziert werden, wobei das Gewicht ein Ausmaß definiert, bis zu dem auf das zugehörige Merkmal zur Lokalisierung der mobilen Vorrichtung (2) vertraut werden kann; und
Senden der modifizierten lokalen Lokalisierungskarte (20a') an die mobile Vorrichtung (2).

8. Computerprogrammprodukt (64, 90), umfassend ein Computerprogramm nach Anspruch 7 und ein Speichermedium, auf welchem das Computerprogramm gespeichert ist.

## Revendications

1. Procédé de prise en charge de localisation d'un dispositif mobile (2) sur la base d'une carte de localisation locale comprenant un certain nombre de particularités, dans lequel chaque particularité comprend des données d'emplacement et des caractéristiques géométriques de la particularité, le procédé comprenant :
la détermination (40) d'une carte de localisation locale (20a) sur la base d'un emplacement du dispositif mobile (2) ;
la recherche (42), dans la carte de localisation locale (20a), d'au moins une première région (22a) et une deuxième région (22b) comprenant des particularités similaires, sur la base d'un algorithme d'une procédure de localisation et de cartographie simultanées, SLAM, qui est utilisable par le dispositif mobile (2) pour comparer des particularités déduites de données visuelles et/ou structurelles capturées à des particularités dans la carte de localisation locale ;
**caractérisé en ce qu'**il comprend en outre :
la modification (44) de la carte de localisation locale (20a) pour réduire une similarité entre la première région (22a) et la deuxième région (22b), en réduisant un poids d'une pluralité de particularités, chacune d'entre elles se trouvant dans la première région (22a) ou dans la deuxième région (22b) et étant similaire à une autre particularité dans l'autre de la première région (22a) et de la deuxième région (22b), dans lequel le nombre de particularités dont des poids sont réduits dans la première région (22a) est équilibré avec le nombre de particularités dont des poids sont réduits dans la deuxième région (22b), dans lequel le poids définit l'ampleur de l'emploi de la particularité associée pour la localisation du dispositif mobile (2) ; et
la transmission (46) de la carte de localisation locale modifiée (20a') au dispositif mobile (2).

2. Procédé selon la revendication 1, dans lequel la réduction du poids d'une particularité comprend la définition du poids de la particularité à zéro ou la suppression de la particularité de la carte de localisation locale.

3. Procédé selon la revendication 1 ou 2, dans lequel l'ampleur de chaque réduction de poids est basée sur une ampleur d'une similarité entre les particularités qui sont similaires en paires dans la première région (22a) et la deuxième région (22b).

4. Serveur de carte (1) pour la prise en charge de localisation d'un dispositif mobile (2) sur la base d'une carte de localisation locale comprenant un certain nombre de particularités, dans lequel chaque particularité comprend des données d'emplacement et des caractéristiques géométriques, le serveur de carte (1) comprenant :
un processeur (60) ; et
une mémoire (64) stockant des instructions (67) qui, lorsqu'elles sont exécutées par le processeur, amènent le serveur de carte (1) à :
déterminer la carte de localisation locale (20a) sur la base d'un emplacement du dispositif mobile (2) ;
rechercher, dans la carte de localisation locale (20a), au moins une première région (22a) et une deuxième région (22b) comprenant des particularités similaires, sur la base d'un algorithme d'une procédure de localisation et de cartographie simultanées, SLAM, qui est utilisable par le dispositif mobile (2) pour comparer des particularités déduites de données visuelles et/ou structurelles capturées à des particularités dans la carte de localisation locale ;
**caractérisé en ce que** les instructions, lorsqu'elles sont exécutées par le processeur, amènent en outre le serveur de carte à :
modifier la carte de localisation locale (20a) pour réduire une similarité entre la première région (22a) et la deuxième région (22b), en réduisant un poids d'une pluralité de particularités, chacune d'entre elles se trouvant dans la première région (22a) ou dans la deuxième région (22b) et étant similaire à une autre particularité dans l'autre de la première région (22a) et de la deuxième région (22b), dans lequel le nombre de particularités dont des poids sont réduits dans la première région (22a) est équilibré avec le nombre de particularités dont des poids sont réduits dans la deuxième région (22b), dans lequel le poids définit l'ampleur de l'emploi de la particularité associée pour la localisation du dispositif mobile (2) ; et
transmettre la carte de localisation locale modifiée (20a') au dispositif mobile (2).

5. Serveur de carte (1) selon la revendication 4, dans lequel les instructions pour réduire le poids d'une particularité comprennent des instructions (67) qui, lorsqu'elles sont exécutées par le processeur, amènent le serveur de carte (1) à définir le poids de la particularité à zéro ou à supprimer la particularité de la carte de localisation locale.

6. Serveur de carte (1) selon la revendication 4 ou 5, dans lequel l'ampleur de chaque ajustement de poids est basée sur une ampleur d'une similarité entre les particularités qui sont similaires en paires dans la première région (22a) et la deuxième région (22b).

7. Programme informatique (67, 91) pour la prise en charge de localisation d'un dispositif mobile (2) sur la base d'une carte de localisation locale comprenant un certain nombre de particularités, dans lequel chaque particularité comprend des données d'emplacement et des caractéristiques géométriques, le programme informatique comprenant un code de programme informatique qui, lorsqu'il est exécuté sur un serveur de carte (1), amène le serveur de carte (1) à :
déterminer une carte de localisation locale (20a) sur la base d'un emplacement du dispositif mobile (2) ;
rechercher, dans la carte de localisation locale (20a), au moins une première région (22a) et une deuxième région (22b) comprenant des particularités similaires, sur la base d'un algorithme d'une procédure de localisation et de cartographie simultanées, SLAM, qui est utilisable par le dispositif mobile (2) pour comparer des particularités déduites de données visuelles et/ou structurelles capturées à des particularités dans la carte de localisation locale ;
**caractérisé en ce que** le code de programme informatique, lorsqu'il est exécuté sur le serveur de carte, amène en outre le serveur de carte à :
modifier la carte de localisation locale (20a) pour réduire une similarité entre la première région (22a) et la deuxième région (22b), en réduisant un poids d'une pluralité de particularités, chacune d'entre elles se trouvant dans la première région (22a) ou dans la deuxième région (22b) et étant similaire à une autre particularité dans l'autre de la première région (22a) et de la deuxième région (22b), dans lequel le nombre de particularités dont des poids sont réduits dans la première région (22a) est équilibré avec le nombre de particularités dont des poids sont réduits dans la deuxième région (22b), dans lequel le poids définit l'ampleur de l'emploi de la particularité associée pour la localisation du dispositif mobile (2) ; et
transmettre la carte de localisation locale modifiée (20a') au dispositif mobile (2).

8. Produit programme informatique (64, 90) comprenant un programme informatique selon la revendication 7 et un support de stockage sur lequel le programme informatique est stocké.
